# EUROPEAN PATENT SPECIFICATION

(11) **EP 2 816 849 B1**
(45) Date of publication and mention of the grant of the patent: **26.10.2016**
(21) Application number: 14171170.5
(22) Date of filing: 04.06.2014
(51) Int. Cl.: H04W 48/20, H04W 48/10, H04W 84/12, H04W 64/00

(54) **Wireless LAN connection method, wireless LAN connection apparatus and carrier medium**
Drahtloses LAN-Verbindungsverfahren, drahtlose LAN-Verbindungsvorrichtung und Trägermedium
Procédé et appareil de connexion de réseau local sans fil et milieu de support

(30) Priority: 19.06.2013 JP 2013128655
(43) Date of publication of application: 24.12.2014
(73) Proprietor: Ricoh Company, Ltd., Tokyo 143-8555 (JP)
(72) Inventor: Tsuji, Shigekazu, Ohta-ku, Tokyo 143-8555 (JP)
(74) Representative: Maury, Richard Philip

(56) References cited:
- US-A1- 2004 106 379
- US-A1- 2008 122 950
- US-A1- 2009 061 870

## Description

### BACKGROUND

### Technical Field

The present invention relates to a wireless local area network (LAN) connection method, a wireless LAN connection apparatus, and a storage medium or carrier medium for connecting a communication terminal to a wireless LAN.

### Background Art

In the advent of widespread use of cell phone terminals and personal digital assistant (PDA) terminals, wireless infrastructure such as Wi-Fi (registered trademark) or the like has been progressed, and wireless local area network (LAN) communication standard of Institute of Electrical and Electronic Engineers (IEEE) 802.11x assures inter-connectivity of apparatuses of different manufactures. In this configuration, various communication terminals can conduct wireless LAN roaming quickly.

The wireless LAN can be used to manage positions of communication terminals by using a management server of wireless LAN, which is disclosed for example in JP-2004-186762 (JP-3761513-B). To connect communication terminals to a wireless LAN in this wireless LAN system, at first, network setting information of the wireless LAN needs to be obtained.

In this configuration, each communication terminal obtains position information from a transmission apparatus such as an indoor messaging system (IMES) disposed indoors and a global positioning system (GPS) disposed outdoors. Further, the communication terminal transmits the obtained position information and terminal (identification) ID of the communication terminal to a wireless LAN access point using the communication standard of IEEE 802.11x. Further, the access point transfers the position information and the terminal ID of the communication terminal to a management server of the wireless LAN. With this configuration, the management server can manage position of the communication terminal on the wireless LAN.

However, to transmit the position information and the terminal ID from the communication terminal using the communication standard of the wireless LAN, the communication terminal needs to include a wireless LAN transmitter. The wireless LAN transmitter requires significantly greater power consumption compared to a receiver of IMES (or outdoor GPS) that operates with less power consumption. Therefore, even if the receiver of IMES is used for power-saving, it is difficult to reduce power consumption of the transmitter of the communication terminal, with which it is difficult to enhance the power-saving of the entire communication terminal.

Further, the settings of wireless LAN are different for each organization such as each office building and each floor. Therefore, apparatuses adapted to wireless LAN need to set different settings for each wireless LAN environment. The settings of wireless LAN may mean settings used for infrastructure connection for wireless LAN access point such as service set identifiers (SSID) and encryption keys.

Further, as to various communication terminals, for example, some communication terminals such as projectors may be used by a plurality of organizations or groups. As to the communication terminals used by the plurality of organizations, the above described setting operation is not convenient, with which functions of wireless LAN may not be effectively and sufficiently used.

US 2004/106379A discloses pre-storing connection information and position information for a wireless LAN access point disposed in a given area to the connection apparatus by correlating the position information and the connection information of the wireless LAN access point, the connection information composed of identifier information, encryption type information, and encryption information for connection to the wireless LAN access point disposed in the given area; transmitting position information from a position information transmission apparatus capable of transmitting position information corresponding to a given position using a wireless communication protocol other than wireless LAN protocol; receiving the position information transmitted from the position information transmission apparatus by the connection apparatus; and connecting the connection apparatus to the wireless LAN access point using the pre-stored connection information set to the connection apparatus when the pre-stored position information matches the received position information.

The invention is in the method of Claim 1.

A communication terminal can use a transmitter having a power-saving performance for automatically setting/connecting to a wireless LAN access point, with which a wireless LAN connection method, a wireless LAN connection apparatus and a carrier medium storing a program that can conduct quick roaming can be provided.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of a wireless LAN station including a wireless LAN connection apparatus according to an example embodiment;
FIG. 2 is a schematic configuration of use environment of a wireless LAN station including a wireless LAN connection apparatus according to an example embodiment;
FIG. 3 is a hardware configuration of a LED lamp used as a lighting apparatus for the wireless LAN station using a wireless LAN connection apparatus according to an example embodiment;
FIG. 4 is a hardware configuration of a projector used as a communication terminal for a wireless LAN station using a wireless LAN connection apparatus according to an example embodiment;
FIG. 5 is a flowchart showing the steps of process for connecting a projector to a wireless LAN access point according to a first example embodiment;
FIG. 6 is a flowchart showing the steps of process for connecting a projector to a wireless LAN access point according to a second example embodiment; and
FIG. 7 is a flowchart showing the steps of process for connecting the projector to a wireless LAN access point according to a third example embodiment.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that have a similar function, operate in a similar manner, and achieve a similar result. Referring now to the drawings, an apparatus or system according to an example embodiment is described hereinafter.

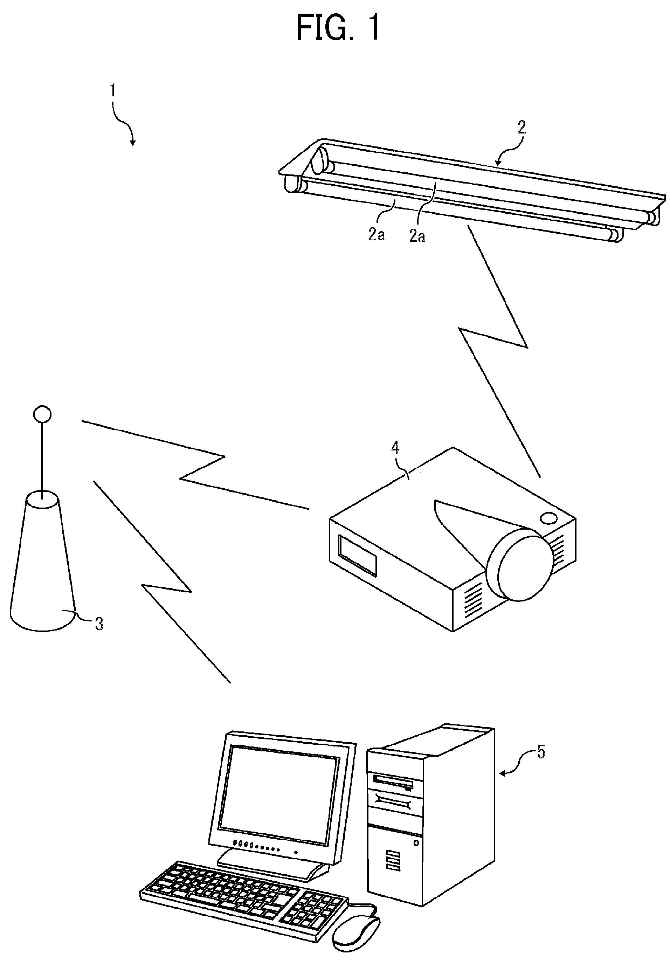

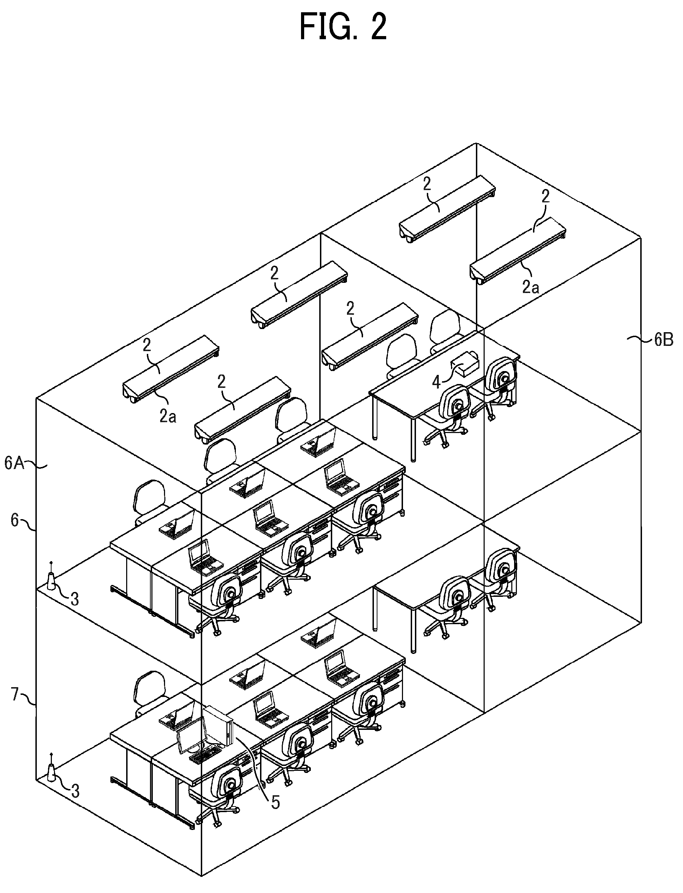

A description is given of a wireless local area network (LAN) connection apparatus according to one or more example embodiments of the present invention with reference to FIGs. 1 to 7. FIG. 1 illustrates a schematic configuration of a wireless LAN station 1 including a wireless LAN connection apparatus according to an example embodiment. FIG. 2 illustrates a schematic configuration of use environment of the wireless LAN station 1 including the wireless LAN connection apparatus according to an example embodiment.

As illustrated in FIG. 1, the wireless LAN station 1 can be configured with a lighting apparatus 2 such as a tube-type lighting apparatus using a light emitting diode (LED) that can emit light, an image projection apparatus 4, and a management server 5, in which the lighting apparatus 2 can be used as a position information transmission apparatus. The image projection apparatus 4 such as a projector can be used as a communication terminal and a connection apparatus connectable to a wireless LAN access point 3.

For example, as illustrated in FIG. 2, an office building have several floors such as a first floor 6 and a second floor 7, in which different service set identifiers (SSIDs) are set for each of the first floor 6 and the second floor 7 in line with different business units in the office. In an example case of FIG. 2, the first floor 6 and the second floor 7 have the same office layout for the simplicity of description.

Different from wired LAN, wireless LAN uses radio waves for data communication. Therefore, interference of radio waves may occur when communication is conducted using a plurality of wireless LAN access points. In view of the interference of radio waves, each of the wireless LAN access points 3 can be set with different SSIDs so that communication can be conducted only with a terminal using the matched SSID. Therefore, in this disclosure, for example, the wireless LAN access point 3 is disposed for the first floor 6 by setting one SSID, and the wireless LAN access point 3 is disposed for the second floor 7 by setting other SSID, which means different SSIDs are set for each of the first floor 6 and the second floor 7.

Further, as illustrated in FIG. 2, for example, the first floor 6 is segmented into a working room 6A and a meeting room 6B, and a plurality of lighting apparatuses 2 such as tube LED lamps are disposed or placed on a ceiling of each of the working room 6A and the meeting room 6B. The lighting apparatus 2 includes, for example, a light emitting diode (LED) unit 2a. The lighting apparatus 2 or LED unit 2a attached to the lighting apparatus 2 can output position information corresponding to a position of the lighting apparatus 2 or the LED unit 2a placed on the ceiling. In this configuration, each lighting apparatus 2 (or LED unit 2a) can output different position information depending on positions of lighting apparatuses 2.

Further, the same position information can be output from a plurality of lighting apparatuses 2 placed within the same given area such as the room 6A, the room 6B, or the like. Further, depending on a size of each of the rooms 6A and 6B, position information can be output only from a given lighting apparatus 2 (or LED unit 2a), in which at least one lighting apparatus 2 (or LED unit 2a) outputs position information.

In this disclosure, an example case is described, in which a plurality of lighting apparatuses 2 is disposed for the working room 6A, in which position information is output from a given LED unit 2a of the lighting apparatus 2, and a plurality of lighting apparatuses 2 is disposed for the meeting room 6B, in which position information is output from a given LED unit 2a of the lighting apparatus 2.

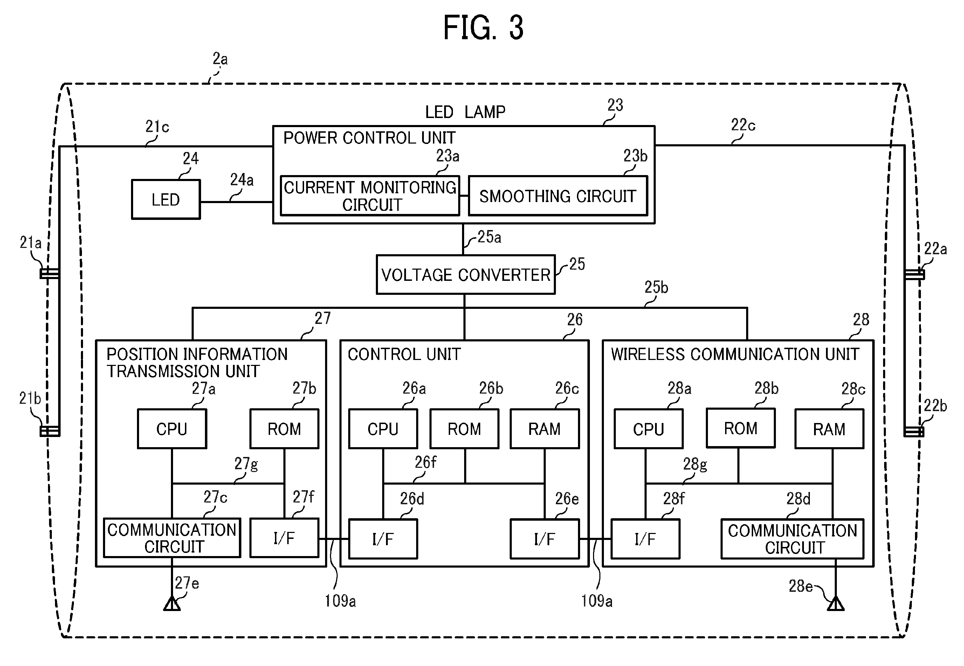

FIG. 3 is a hardware configuration of a LED lamp disposed for the lighting apparatus 2 for the wireless LAN station 1 using a wireless LAN connection apparatus according to an example embodiment.

As illustrated in FIG. 3, the LED unit 2a includes terminal pins 21a, 21b, 22a, 22b to attach the LED unit 2a to the lighting apparatus 2, in which the pins at both ends of the LED unit 2a can be attached to the lighting apparatus 2. The LED unit 2a includes a power control unit 23, a lead line 21c, a lead line 22c, a lead line 24a, a lead line 25a, a lead line 25b, a light emitting diode (LED) 24, and a voltage converter 25.

The power control unit 23 includes a current monitoring circuit 23a and a smoothing circuit 23b to control current output from a commercial power source. The current monitoring circuit 23a is input with current, output from the commercial power source, and rectifies the input current. The smoothing circuit 23b smoothes the current rectified by the current monitoring circuit 23a, and supplies power to each of the terminal pins 21a, 21b, 22a, 22b through the lead lines 21c and 22c.

Further, the power control unit 23 and the terminal pins 21a, 21b, 22a, 22b are electrically connected by the lead lines 21c and 22c. The power control unit 23 and the LED 24 are electrically connected by the lead line 24a. In FIG. 3, only one LED is described as the LED 24 but a plurality of LEDs can be disposed as the LED 24.

The voltage converter 25 is electrically connected to a control unit 26, a position information transmission unit 27, and a wireless communication unit 28 by using the lead line 25b.

The voltage converter 25, which is an electronic device, converts power voltage supplied from the power control unit 23 to drive voltage of the LED unit 2a, and supplies the drive voltage to the control unit 26, the position information transmission unit 27, and the wireless communication unit 28.

Further, the control unit 26 includes, for example, a central processing unit (CPU) 26a, a read only memory (ROM) 26b, a random access memory (RAM) 26c, an interface (I/F) 26d, an interface (I/F) 26e, and a bus line 26f. The CPU 26a controls operations of the control unit 26 as a whole. The ROM 26b stores a basic input/output program. The RAM 26c is used as a working memory of the CPU 26a. The I/F 26d is used for transmitting and receiving signals with the position information transmission unit 27. The I/F 26e is used for transmitting signals to the wireless communication unit 28 and receiving signals from the wireless communication unit 28. The bus line 26f such as an address bus and a data bus connects the above units electrically.

Further, the position information transmission unit 27 includes, for example, a CPU 27a, a ROM 27b, a communication circuit 27c, an antenna 27e, an I/F 27f, and a bus line 27g. The CPU 27a controls operations of the position information transmission unit 27. The I/F 27f is used for transmitting signals to the control unit 26 and receiving signals from the control unit 26. The bus line 27g such as an address bus and a data bus connects the above units electrically.

The ROM 27b stores a basic input/output program, position information where the lighting apparatus 2 is disposed, and connection information used for connecting a connection apparatus (e.g., client apparatus) such as the image projection apparatus 4 to the wireless LAN access point 3.

The position information indicates a position where the LED unit 2a is placed such as a level of floor (e.g., 1^{st} floor, 2^{nd} floor), latitude, longitude, room name or the like.

The level of floor indicates the number of floors in a building such as the first floor 6 and the second floor 7 where the LED unit 2a is disposed in an example case of FIG. 2. The latitude and longitude indicate latitude and longitude of a position where the LED unit 2a is disposed. The room name indicates a room such as the working room 6A and the meeting room 6B where the LED unit 2a (FIG. 2) is disposed. In an example case of FIG. 2, the image projection apparatus 4 is disposed at a point having a given latitude and longitude in the meeting room 6B of the first floor 6. The latitude can be expressed by north/south latitude, and the longitude can be expressed by east/west longitude.

The connection information includes, for example, identifier information, encryption key type information, and encryption information. The identifier information is, for example, service set identifier (SSID) set for a wireless LAN corresponded to the wireless LAN access point 3, which is desired to be connected with the. The encryption key information is type information of encryption key set by the SSID. The encryption information is, for example, an encryption key set by a string of characters.

The communication circuit 27c can use an indoor positioning technology (e.g., indoor GPS) such as an indoor messaging system (IMES) to transmit position information and connection information using the antenna 27e.

Further, the wireless communication unit 28 includes, for example, a CPU 28a, a ROM 28b, a communication circuit 28d, an antenna 28e, an I/F 28f, and a bus line 28g. The CPU 28a controls operations of the wireless communication unit 28. The ROM 28b stores a basic input/output program and apparatus identification information. The RAM 28c is used as a working memory of the CPU 28a. The I/F 28f is used for transmitting signals to the control unit 26 and receiving signals from the control unit 26. The bus line 28g such as an address bus and a data bus connects the above units electrically.

Further, the wireless communication unit 28 uses, for example, 920 MHz band for transmitting and receiving data. Because 920 MHz band has higher radio wave reaching performance, even if a pillar or a wall of a building exists between the LED unit 2a and the wireless LAN access point 3, data can be transmitted from the LED unit 2a to the wireless LAN access point 3.

Further, the communication circuit 28d uses at least the physical layer standard of an architecture mode of IEEE 802.15.4 standard for transmitting and receiving data using the antenna 28e. Further, in this case, a media access control (MAC) address can be used as apparatus identification information to identify the LED unit 2a.

In an example embodiment, ZigBee (registered trademark) using the physical layer and MAC layer of architecture mode of IEEE 802.15.4 standard can be used. In this case, the LED unit 2a selectively uses 800 MHz band, 900 MHz band, and 2.4 GHz band depending on user locations such as Japan, United States (US) and Europe so that data can be transmitted to the wireless LAN access point 3. In this configuration, a multi-hop communication can be employed, in which one LED unit 2a can transmit data to the wireless LAN access point 3 via other LED unit 2a, in which the wireless communication unit 28 of each one of the LED lighting units 2a need some time for a routing process, but data can be transmitted to a nearest LED unit 2a with a power level that can transmit data from one LED unit 2a to the nearest LED unit 2a, with which the LED unit 2a can be driven by saving power consumption.

The position information and connection information can be received by the communication circuit 28d of the wireless communication unit 28 via wireless communication from the wireless LAN access point 3 using the management server 5, and the position information and connection information can be stored in the RAM 26c of the control unit 26 or the ROM 27b (e.g., flash memory) of the position information transmission unit 27 via the control unit 26. Further, the position information and connection information can be stored in the RAM 26c of the control unit 26 by a user or other person before or when the LED unit 2a is attached to the lighting apparatus 2 by the user.

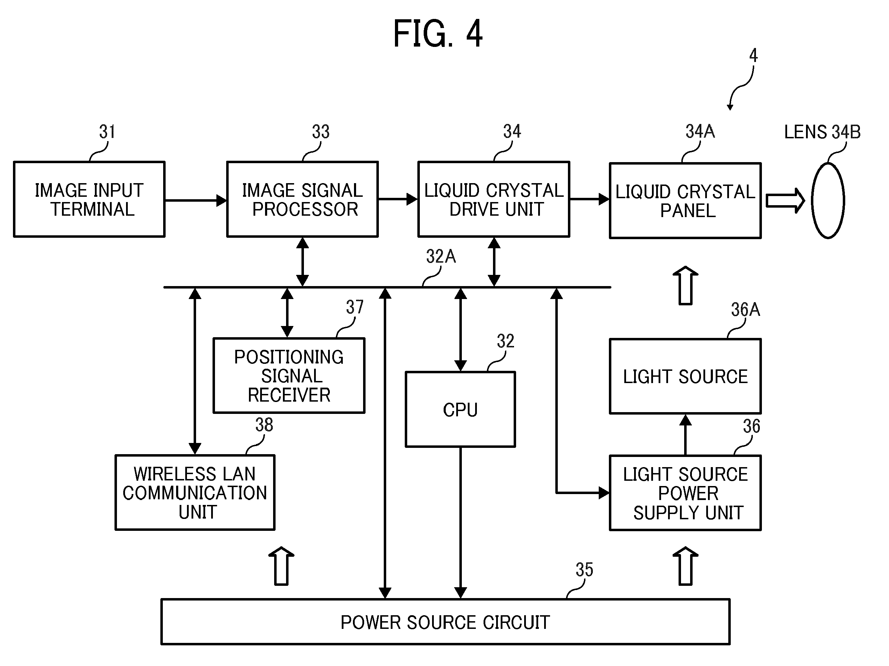

A description is given of hardware configuration of the image projection apparatus 4 with reference to FIG. 4. FIG. 4 illustrates a hardware configuration of a projector which is used as a communication terminal in the wireless LAN station 1 according to an example embodiment.

The image projection apparatus 4 can project images received from, for example, an output device such as a personal computer (PC) and a digital versatile disk (DVD) player, a converting device such as a set-top box having a tuner to receive broadcasting signals, and a storage medium or carrier medium such as SD memory card that can store image signals. The image projection apparatus 4 can project movie images and still images, and can output audio. In the following description, image or images may mean movie images and/or still images. When image signals are output from devices such as the above described output device and converting device to the image projection apparatus 4, an image output terminal of the above mentioned device and an image input terminal 31 of the image projection apparatus 4 is connected using a cable.

The image projection apparatus 4 includes a CPU 32, a bus 32A, an image signal processor 33, a liquid crystal drive unit 34, a power source circuit 35, a light source power supply unit 36, a positioning signal receiver 37, and a wireless LAN communication unit 38. The bus 32A is used to connect units with each other. The CPU 32 controls the image signal processor 33, the liquid crystal drive unit 34, the power source circuit 35, the light source power supply unit 36, the positioning signal receiver 37, and the wireless LAN communication unit 38.

The image signal processor 33 conducts image contrast adjustment, image brightness adjustment, image sharpness adjustment, scaling process, and superimposing of menu information such as on-screen display (OSD). The image projection apparatus 4 can employ various image projection methods such as a liquid crystal method and a digital light processing (DLP) method using a digital mirror device (DMD). In this description, the liquid crystal method is used.

Image signals processed by the image signal processor 33 are converted to image signals of red (R), green (G) and blue (B) by the liquid crystal drive unit 34, and the converted image signals are output to the liquid crystal panel 34A which is used as displaying primary colors (RGB). In the image projection apparatus 4, light emitted from the light source 36A passes through the liquid crystal panel 34A. RGB image light generated based on image signals input to the liquid crystal drive unit 34 passes through a projection lens 34B (FIG. 4), and then the RGB image is projected outside the image projection apparatus 4.

Light intensity of the light source 36A can be changed by the light source power supply unit 36 controlled by the CPU 32. Power can be supplied to the light source power supply unit 36 from the power source circuit 35. When the image projection apparatus 4 is activated, the CPU 32 detects that a power button of the image projection apparatus 4 is pressed by an operator or a user, and then the CPU 32 instructs the power source circuit 35 to supply power to each unit.

The wireless LAN communication unit 38 is used to conduct wireless communication using an infrastructure connection via the wireless LAN access point 3. The infrastructure connection uses a setting value such as SSID to identify the wireless LAN access point 3. The client apparatus such as the image projection apparatus 4 can be set with SSID of a wireless LAN access point 3 to be connected with. Further, an encryption key to encrypt communication data can be set for the wireless LAN access point 3 for data security.

The encryption key is, for example, password information, which can be prepared by combining a certain number of characters, numerals, and/or symbols so that the password information cannot be guessed easily by a third party. For example, the types of encryption key include WEP (wired equivalent privacy), WPA (Wi-Fi protected access), WPA2 (Wi-Fi protected access 2) or the like. Typically, the encryption key sets different keys for different SSID. Further, as to typical offices, different SSIDs are set for different business units defined by floors, buildings or the like.

In this configuration, the connection apparatus (or client apparatus) such as the image projection apparatus 4 can be connected to a desired wireless LAN access point 3 using connection information composed of SSID of wireless LAN matched to the connection-desired wireless LAN access point 3, type of encryption key that the concerned SSID sets, and encryption key such as a string of characters. Therefore, the image projection apparatus 4 (i.e., client apparatus) needs to have at least this setting information (i.e., connection information) when the image projection apparatus 4 is to be connected with the wireless LAN access point 3

In an example embodiment, the LED unit 2a of the lighting apparatus 2 disposed or placed in an office can be configured to transmit position information to identify a position of the LED unit 2a and the above described setting information (i.e., connection information) to the image projection apparatus 4 using a wireless communication protocol other than a wireless LAN protocol such as Zigbee (registered trademark) to be described later.

In this configuration, even if the image projection apparatus 4 does not have position information corresponding to a position where the image projection apparatus 4 is to be used, and connection information to a wireless LAN point 3 at an area where the image projection apparatus 4 is to be used, the image projection apparatus 4 can be connected to the wireless LAN access point 3, and the position information of the image projection apparatus 4 can be obtained by using the management server 5.

By obtaining the position information of the image projection apparatus 4 (i.e., client apparatus) using the management server 5, management of position of a client apparatus such as current position of the client apparatus can be conducted easily. Therefore, the image projection apparatus 4 (i.e., client apparatus) can be used and managed as a shared apparatus at any places such as the first floor 6 and the second floor 7.

In this description, a wireless communication protocol for transmitting and receiving position information can use a wireless communication protocol such as ZigBee (registered trademark) of IEEE 802.15.4, which is different from the wireless LAN of IEEE 802.11x. The lighting apparatus 2 (LED unit 2a) can transmit its position information and SSID of wireless LAN assigned to each of the first floor 6 and the second floor 7, an encryption key type, and a string of characters used as an encryption key to the image projection apparatus 4 using a wireless communication protocol such as ZigBee (registered trademark) of IEEE 802.15.4 other than wireless LAN.

The positioning signal receiver 37 of the image projection apparatus 4 receives position information and connection information from the lighting apparatus 2, and uses the connection information to connect the image projection apparatus 4 with the wireless LAN access point 3. Further, after completing the connection, the position information can be managed by the management server 5.

### (First example embodiment)

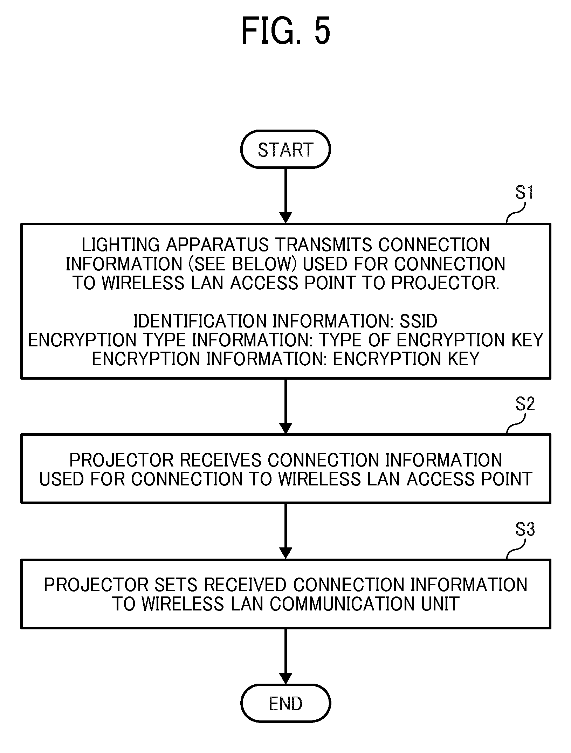

A description is given of a first example embodiment of the wireless LAN station 1 including the wireless LAN connection apparatus according to an example embodiment with reference to FIG. 5, which is a flowchart showing the steps of process for connecting the image projection apparatus 4 (wireless LAN connection apparatus) to the wireless LAN access point 3.

At first, the lighting apparatus 2 transmits connection information used for connection to the wireless LAN access point 3 using a wireless communication protocol other than the wireless LAN protocol (step S1). In this process, the lighting apparatus 2 transmits the connection information stored in the ROM 27b, wherein the connection information includes SSID of wireless LAN set for the wireless LAN access point 3 installed at an area including a position where the lighting apparatus 2 is disposed, encryption type information, which is type information of encryption key set by the SSID, and an encryption key, which is a string of characters, used as encryption information. Further, at the same time when the connection information is transmitted, the lighting apparatus 2 transmits position information of the lighting apparatus 2 stored in the ROM 27b, wherein the position information indicates a position where the lighting apparatus 2 is disposed. In another configuration, the position information of the lighting apparatus 2 can be transmitted after transmitting the connection information.

Then, the image projection apparatus 4 receives the connection information used for connection to the wireless LAN access point 3 using a wireless communication protocol other than the wireless LAN protocol (step S2).

Further, the image projection apparatus 4 sets the received connection information composed of SSID, encryption key type, and encryption key to the wireless LAN communication unit 38 (step S3). By transmitting the connection information to a connection-desired wireless LAN access point 3 from the wireless LAN communication unit 38, the image projection apparatus 4 can be connected to the connection-desired wireless LAN access point 3.

### (Second example embodiment)

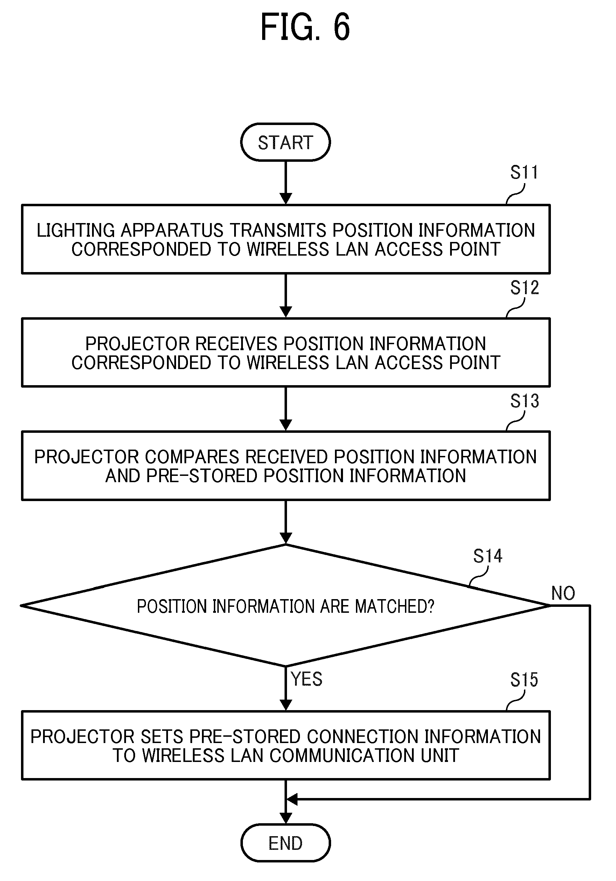

A description is given of a second example embodiment of wireless LAN station 1 including the wireless LAN connection apparatus according to an example embodiment with reference to FIG. 6, which is a flowchart showing the steps of process for connecting the image projection apparatus 4 (wireless LAN connection apparatus) to the wireless LAN access point 3.

In the above described first example embodiment, position information and setting information (i.e., connection information) are transmitted from the lighting apparatus 2. In the second example embodiment, setting information (i.e., connection information), which has greater quantity of information, can be stored in a memory of the image projection apparatus 4 by correlating the position information and the setting information (i.e., connection information), which may be referred to as pre-stored position information and pre-stored connection information.

In this configuration, the lighting apparatus 2 transmits only position information corresponded to the wireless LAN access point 3 to the image projection apparatus 4 using a wireless communication protocol other than the wireless LAN protocol (step S11).

The image projection apparatus 4 receives the position information corresponded to the wireless LAN access point 3 from the lighting apparatus 2 (step S12).

Further, in the image projection apparatus 4, the CPU 32 compares the received position information received from the lighting apparatus 2 and pre-stored position information to check whether the received position information and the pre-stored position information are matched (step S 13).

Upon completing a comparison process using the CPU 32 of the image projection apparatus 4, if the received position information and the pre-stored position information are matched (step S14 : YES), the connection information (composed of SSID, encryption key type, and encryption key), which is correlated to the pre-stored position information, is set to the wireless LAN communication unit 38 (step S15). By transmitting the connection information to a connection-desired wireless LAN access point 3 from the wireless LAN communication unit 38, the image projection apparatus 4 can be connected to the connection-desired wireless LAN access point 3.

### (Third example embodiment)

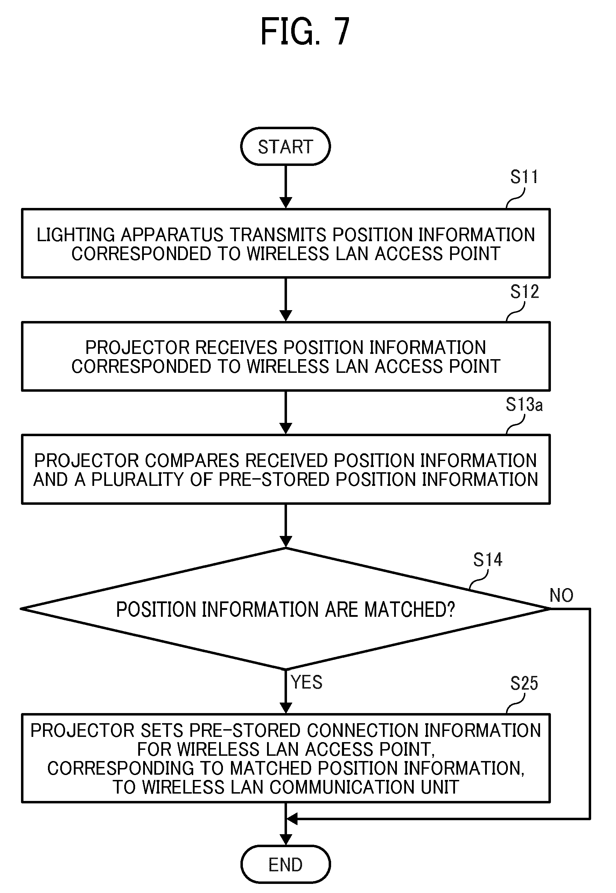

A description is given of a third example embodiment of wireless LAN station 1 including a wireless LAN connection apparatus according to an example embodiment with reference to FIG. 7, which is a flowchart showing the steps of process for connecting the image projection apparatus 4 (wireless LAN connection apparatus) to the wireless LAN access point 3.

In the above described second example embodiment, position information of the lighting apparatus 2 placed in one area of one wireless LAN access point 3 is correlated to setting information (i.e., connection information). Therefore, the image projection apparatus 4 can be connected to the wireless LAN access point 3 when the image projection apparatus 4 is used in the same wireless LAN area. For example, when the image projection apparatus 4 is disposed either the working room 6A or the meeting room 6B in the first floor 6, the image projection apparatus 4 can be connected to the wireless LAN access point 3 disposed for the first floor 6.

In the third example embodiment, the image projection apparatus 4 can be connected to the wireless LAN access point 3 disposed for the first floor 6 and also to the wireless LAN access point 3 disposed for second floor 7.

In this configuration, the lighting apparatus 2 transmits only position information corresponded to the wireless LAN access point 3 to the image projection apparatus 4 using a wireless communication protocol other than the wireless LAN protocol (step S11).

The image projection apparatus 4 receives the position information corresponded to the wireless LAN access point 3 from the lighting apparatus 2 (step S12).

Further, in the image projection apparatus 4, the CPU 32 compares the received position information and pre-stored position information to check whether the received position information and the pre-stored position information are matched (step S13a). Specifically, the image projection apparatus 4 stores position information of lighting apparatus 2 placed in each room by correlating the position information and the connection information of the wireless LAN access point 3 of each floor. Specifically, position information of a plurality of the lighting apparatuses 2 placed in each room in the first floor 6 is correlated to the connection information of the wireless LAN access point 3 disposed for the first floor 6, and position information of a plurality of the lighting apparatuses 2 placed in each room in the second floor 7 is correlated to the connection information of the wireless LAN access point 3 disposed for the second floor 7.

In an example case of FIG. 2, for example, as to the first floor 6, connection information used for connection to the wireless LAN access point 3 disposed in the first floor 6 and position information of each of the working room 6A and the meeting room 6B are correlated and stored in the image projection apparatus 4.

Therefore, based on the pre-stored position information matched to the received position information, the CPU 32 of the image projection apparatus 4 can identify a position where the image projection apparatus 4 is currently disposed by identifying a room number and a corresponding floor where the image projection apparatus 4 is currently disposed (step S14).

Then, the image projection apparatus 4 sets connection information composed of SSID, encryption key type, and encryption key, correlated to the pre- stored position information, to the wireless LAN communication unit 38 (step S25). By transmitting the connection information to a connection-desired wireless LAN access point 3 from the wireless LAN communication unit 38, the image projection apparatus 4 can be connected to the connection-desired wireless LAN access point 3.

In the above described first to third example embodiments, upon completing the connection to the wireless LAN access point 3, the management server 5 can identify and manage a current position of the image projection apparatus 4.

For example, apart from a network server that the management server 5 can be connected, the management server 5 can be connected to any one of the wireless LAN access point 3 in the first floor 6 and the wireless LAN access point 3 in the second floor 7.

For example, in a case of FIG. 2, the image projection apparatus 4 is disposed in the meeting room 6B of the first floor 6. In this case, when the management server 5 is connected to the wireless LAN access point 3 in the second floor 7 to identify a current position of the image projection apparatus 4, the management server 5 can recognize that the image projection apparatus 4 is not disposed in the second floor 7 because the image projection apparatus 4 is disposed in the meeting room 6B of the first floor 6.

Then, if the management server 5 is connected to the wireless LAN access point 3 in the first floor 6, the management server 5 can recognize that the image projection apparatus 4 is disposed in the meeting room 6B of the first floor 6.

The above described example embodiments can be applied as a wireless LAN connection method, a wireless LAN connection apparatus, and a storage medium or carrier medium storing a program of wireless LAN connection method, in which a communication terminal or apparatus can be devised as a power-saving apparatus by using a wireless communication protocol other than wireless LAN such as ZigBee because the wireless communication protocol other than the wireless LAN protocol can reduce energy consumption during a stand-by period and during an information receiving period, and an automatic setting/connection to a wireless LAN access point can be conducted. Therefore, roaming can be conducted with a shorter time. The above described example embodiments can be usefully applied to a technology for connection to a wireless LAN access point using an electronic device (e.g., lighting apparatus 2) placed in each room as a position information transmission apparatus, and using a portable/moveable electronic device (e.g., image projection apparatus 4) as a connection apparatus.

In the above described example embodiments, a communication terminal can use a transmitter having a power-saving performance for automatically setting/connecting to a wireless LAN access point, with which a wireless LAN connection method, a wireless LAN connection apparatus and a carrier medium storing a program that can conduct quick roaming can be provided.

The program can be distributed by storing the program in a storage medium or carrier medium such as CD-ROM. Further, the program can be distributed by transmitting signals from a given transmission device via a transmission medium such as communication line or network (e.g., public phone line, specific line) and receiving the signals. When transmitting signals, a part of data of the program is transmitted in the transmission medium, which means, entire data of the program is not required to be on in the transmission medium. The signal for transmitting the program is a given carrier wave of data signal including the program. Further, the program can be distributed from a given transmission device by transmitting data of program continually or intermittently.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium, carrier medium, carrier means, or digital data carrier for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic Tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image forming apparatus using a computer-readable program, which can execute the above-described processes or steps. In the above described embodiments, at least one or more of the units of apparatus can be implemented in hardware or as a combination of hardware/software combination. In example embodiment, processing units, computing units, or controllers can be configured with using various types of processors, circuits, or the like such as a programmed processor, a circuit, an application specific integrated circuit (ASIC), used singly or in combination.

Numerous additional modifications and variations are possible in light of the above teachings. It is therefore to be understood that, within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. A wireless local area network, LAN, connection method, the method comprising the steps of:
transmitting connection information composed of identifier information, encryption type information, and encryption information for connection to a wireless LAN access point (3) disposed in a given area from a position information transmission apparatus (2) capable of transmitting position information corresponding to a given position using a wireless communication protocol other than a wireless LAN protocol;
receiving the connection information for connection to the wireless LAN access point (3) by a connection apparatus (4); and
connecting the connection apparatus (4) to the wireless LAN access point (3) using the received connection information.

2. The wireless LAN connection method of claim 1,
wherein the transmitting includes one of:
transmitting position information to the connection apparatus (4) from the position information transmission apparatus (2) with the connection information at the same time using the wireless communication protocol other than the wireless LAN protocol, and
transmitting position information to the connection apparatus (4) from the position information transmission apparatus (2) after transmitting the connection information using the wireless communication protocol other than the wireless LAN protocol.

3. A computer-readable carrier medium storing a program that, when executed by a computer having a processing circuit, causes the computer to execute the connection method of wireless LAN of claim 1 or claim 2.

## Patentansprüche

1. Verbindungsverfahren für ein drahtloses Lokalbereichsnetzwerk, LAN, das Verfahren die folgenden Schritte umfassend:
Übertragen von Verbindungsinformationen, zusammengesetzt aus Kennungsinformationen, Verschlüsselungstypinformationen und Verschlüsselungsinformationen, für Verbindung mit einem drahtlosen LAN-Zugangspunkt (3), der in einem gegebenen Gebiet angeordnet ist, von einer Positionsinformationen-Übertragungsvorrichtung (2), die imstande ist, Positionsinformationen, die mit einer gegebenen Position korrespondieren, unter Verwendung eines anderen drahtlosen Kommunikationsprotokolls als ein drahtloses LAN-Protokoll zu übertragen;
Empfangen der Verbindungsinformationen für Verbindung mit dem drahtlosen LAN-Zugangspunkt (3) durch eine Verbindungsvorrichtung (4); und
Verbinden der Verbindungsvorrichtung (4) mit dem drahtlosen LAN-Zugangspunkt (3) unter Verwendung der empfangenen Verbindungsinformationen.

2. Drahtloses LAN-Verbindungsverfahren nach Anspruch 1,
wobei das Übertragen eines von Folgendem enthält:
Übertragen von Positionsinformationen an die Verbindungsvorrichtung (4) von der Positionsinformationen-Übertragungsvorrichtung (2) mit den Verbindungsinformationen zur gleichen Zeit unter Verwendung des anderen drahtlosen Kommunikationsprotokolls als das drahtlose LAN-Protokoll, und
Übertragen von Positionsinformationen an die Verbindungsvorrichtung (4) von der Positionsinformationen-Übertragungsvorrichtung (2) nach Übertragen der Verbindungsinformationen unter Verwendung des anderen drahtlosen Kommunikationsprotokolls als das drahtlose LAN-Protokoll.

3. Computerlesbares Trägermedium, auf dem ein Programm gespeichert ist, das, wenn es von einem Computer mit einer Verarbeitungsschaltung ausgeführt wird, bewirkt, dass der Computer das Verbindungsverfahren des drahtlosen LAN nach Anspruch 1 oder Anspruch 2 ausführt.

## Revendications

1. Procédé de connexion à un réseau local, LAN, sans fil, le procédé comprenant les étapes consistant à :
transmettre des informations de connexion composées d'informations d'identification, d'informations sur le type de cryptage, et d'informations de cryptage en vue d'une connexion à un point d'accès LAN sans fil (3) se trouvant dans une zone donnée à partir d'un appareil de transmission d'informations de position (2) capable de transmettre des informations de position correspondant à une position donnée en utilisant un protocole de communication sans fil autre qu'un protocole LAN sans fil ;
recevoir les informations de connexion en vue d'une connexion au point d'accès LAN sans fil (3) grâce à un appareil de connexion (4) ; et
connecter l'appareil de connexion (4) au point d'accès LAN sans fil (3) en utilisant les informations de connexion reçues.

2. Procédé de connexion à un LAN sans fil selon la revendication 1,
dans lequel l'étape de transmission comprend une étape parmi les étapes consistant à :
transmettre des informations de position vers l'appareil de connexion (4) à partir de l'appareil de transmission d'informations de position (2) en même temps que les informations de connexion en utilisant le protocole de communication sans fil autre que le protocole LAN sans fil, et
transmettre des informations de position vers l'appareil de connexion (4) à partir de l'appareil de transmission d'informations de position (2) après l'étape de transmission des informations de connexion en utilisant le protocole de communication sans fil autre que le protocole LAN sans fil.

3. Support, pouvant être lu par un ordinateur, stockant un programme qui, lorsqu'il est exécuté par un ordinateur présentant un circuit de traitement, amène ledit ordinateur à mettre en oeuvre le procédé de connexion à LAN sans fil selon la revendication 1 ou 2.
